(19) Europäisches Patentamt
European Patent Office
Office européen des brevets

(11) EP 1 511 789 B1

(12) # EUROPÄISCHE PATENTSCHRIFT

(45) Veröffentlichungstag und Bekanntmachung des Hinweises auf die Patenterteilung:
**16.11.2005 Patentblatt 2005/46**

(21) Anmeldenummer: **03755042.3**

(22) Anmeldetag: **21.05.2003**

(51) Int Cl.[7]: **C08G 65/26**

(86) Internationale Anmeldenummer:
**PCT/EP2003/005306**

(87) Internationale Veröffentlichungsnummer:
**WO 2003/099906 (04.12.2003 Gazette 2003/49)**

(54) **VERFAHREN ZUR HERSTELLUNG VON POLYETHEROLEN**
METHOD FOR PRODUCING POLYETHEROLS
PROCEDE DE PRODUCTION DE POLYETHEROLS

(84) Benannte Vertragsstaaten:
**AT BE BG CH CY CZ DE DK EE ES FI FR GB GR HU IE IT LI LU MC NL PT RO SE SI SK TR**

(30) Priorität: **24.05.2002 DE 10223054**

(43) Veröffentlichungstag der Anmeldung:
**09.03.2005 Patentblatt 2005/10**

(73) Patentinhaber: **BASF Aktiengesellschaft
67056 Ludwigshafen (DE)**

(72) Erfinder:
- **WARTINI, Alexander
69120 Heidelberg (DE)**
- **DERNBACH, Matthias
69221 Dossenheim (DE)**
- **HACKMANN, Claus
67281 Kirchheim (DE)**
- **SIRCH, Tilman
67105 Schifferstadt (DE)**

(56) Entgegenhaltungen:
**EP-A- 0 641 814**
**WO-A-98/46663**
**US-A- 5 342 541**
**WO-A-00/73250**
**US-A- 4 751 331**
**US-B1- 6 201 137**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 511 789 B1

## Beschreibung

Die vorliegende Erfindung beschreibt ein Verfahren zur Herstellung von Polyetherolen mehrwertiger Alkohole durch mehrfache Veretherung eines Alkylenoxids mit den entsprechenden mehrwertigen Alkoholen in Gegenwart mindestens eines vorzugsweise basischen Katalysators und gegebenenfalls einem Lösungsmittel.

Unter mehrwertigen Alkoholen werden dabei solche Verbindungen verstanden, die mehrere Hydroxygruppen aufweisen, beispielsweise 2 bis 6, bevorzugt 2 bis 4, besonders bevorzugt 2 bis 3 und insbesondere 3.

Solche Polyetherole werden unter anderem als Ausgangsprodukt zur Herstellung von Polyurethanen, als Schmiermittel und als Zwischenprodukte für Acrylate in zahlreichen Anwendungen eingesetzt.

Gefordert werden für diese Anwendungen vor allem farblose Produkte ohne Eigengeruch, mit geringer Säurezahl und hoher Lagerstabilität.

Die Herstellung von Polyetherolen durch basenkatalysierte Umsetzung eines Alkylenoxids mit den entsprechenden Alkoholen in Gegenwart von Wasser oder einem anderem Lösungsmittel ist allgemein bekannt.

Als Katalysatoren werden in der Regel Amine sowie Alkalihydroxide, Alkoholate oder Hydrotalcit, bevorzugt Alkalihydroxide in Wasser oder Gemische davon verwendet. Neuerdings gewinnen Doppelmetallcyanidkatalysatoren, häufig auch als DMC-Katalysatoren bezeichnet, für die Herstellung Polyetheralkoholen an Bedeutung.

Da die Polyetherole von mehrwertigen Alkoholen aufgrund ihrer hohen Siedepunkte in der Regel nicht destillativ gereinigt werden können, verbleiben Nebenprodukte im Endprodukt und beeinflussen die Weiterverarbeitung und/oder die Qualität sowohl des Zielethers als auch der Folgeprodukte.

Die Aufgabe der vorliegenden Erfindung bestand darin, ein wirtschaftliches Verfahren zu entwickeln, das die Herstellung von Polyetherolen mehrwertiger Alkohole in hoher Reinheit und hoher Ausbeute auf einfache Weise und ohne zusätzliche Hilfsstaffe im technischen Maßstab ermöglicht.

Gefunden wurde nun ein Verfahren gemäss Anspruch 1 zur Herstellung von Polyetherolen von mehrwertigen Alkoholen durch Umsetzung von Alkylenoxiden mit dem entsprechenden mehrwertigen Alkohol in Gegenwart mindestens eines basischen Katalysators und gegebenenfalls in Gegenwart eines Lösungsmittels, wobei der eingesetzte mehrwertige Alkohol einen Formaldehydacetalgehalt unter 500 ppm aufweist.

Das gefundene Verfahren hat folgenden entscheidenden Vorteil: Das Endprodukt ist weitgehend farblos. Farbzahlschwankungen zwischen unterschiedlichen Produktionskampagnen treten nicht auf.

Im erfindungsgemäßen Verfahren werden solche mehrwertigen Alkohole eingesetzt, die durch Umsetzung eines Aldehyds mit Formaldehyd und anschließender Überführung der Aldehydgruppe in eine Hydroxygruppe erhalten werden.

Bei den mehrwertigen Alkoholen handelt es sich um solche gemäss Formel (I):

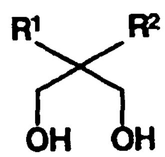

(I)

Darin bedeuten

$R^1$, $R^2$ unabhängig voneinander Wasserstoff, $C_1$-$C_{10}$-Alkyl, $C_1$-$C_{10}$-Hydroxyalkyl, Carboxyl oder $C_1$-$C_4$-Alkoxycarbonyl, bevorzugt Wasserstoff, Hydroxymethyl und $C_1$-$C_{10}$-Alkyl und besonders bevorzugt Hydroxymethyl und $C_1$-$C_{10}$-Alkyl.

Dabei können die Alkylreste jeweils geradkettig oder verzweigt sein.

Beispiele für $R^1$ und $R^2$ sind Wasserstoff; Methyl, Ethyl, isoPropyl, n-Propyl, n-Butyl, iso-Butyl, sek-Butyl, tert-Butyl, n-Pentyl, n-Hexyl, n-Heptyl, n-Octyl, n-Decyl, Hydroxymethyl, Carboxyl, Methoxycarbonyl, Ethoxycarbonyl oder n-Butoxycarbonyl, bevorzugt Wasserstoff, Hydroxymethyl, Methyl und Ethyl, besonders bevorzugt Hydroxymethyl, Methyl und Ethyl.

Beispiele für mehrwertige Alkohole der Formel (I) sind Trimethylolbutan, Trimethylolpropan, Trimethylolethan, Neopentylglykol, Pentaerythrit, 2-Ethyl-1,3-Propandiol, 2-Methyl-1,3-Propandiol, 1,3-Propandiol, bevorzugt sind Neopentylglykol, Trimethylolpropan, Pentaerythrit besonders bevorzugt sind Neopentylglykol, Trimethylolpropan und Pentaerythrit, ganz besonders bevorzugt Trimethylolpropan und Pentaerythrit und insbesondere Trimethylolpropan.

Die mehrwertigen Alkohole der Formel (I) werden erhalten durch Umsetzung eines Aldehydes der Formel (II),

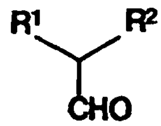 (II)

worin $R^1$ und $R^2$ die obigen Bedeutungen haben, mit Formaldehyd und anschließender Überführung der Aldehydgruppe in eine Hydroxygruppe.

Die mehrwertigen Alkohole der allgemeinen Formel (I) werden in technischem Maßstab durch Kondensation von Formaldehyd mit höheren, CH-aciden Aldehyden (II) erhalten. Dabei unterscheidet man bei dieser Reaktion zwischen zwei prinzipiellen Durchführungsvarianten der Überführung der Aldehydgruppe in eine Hydroxygruppe, die im folgenden an der Herstellung von Trimethylolpropan illustriert.

Zum einen ist dies das sogenannte Cannizzaro-Verfahren, das wiederum unterteilt wird in das anorganische und das organische Cannizzaro-Verfahren. Bei der anorganischen Variante setzt man einen Überschuss an Formaldehyd mit dem entsprechenden Aldehyd (II), also n-Butyraldehyd, in Gegenwart von stöchiometrischen Mengen einer anorganischen Base wie NaOH oder $Ca(OH)_2$ um. Das in der ersten Stufe gebildete Dimethylolbutanal reagiert in der zweiten Stufe mit dem überschüssigen Formaldehyd in einer Disproportionierungsreaktion zu Trimethylolpropan und dem Formiat der entsprechenden Base, also etwa zu Natrium- oder Kalziumformiat. Der Anfall dieser Salze stellt einen Nachteil dar, da sie schwierig vom Reaktionsprodukt abzutrennen sind, und außerdem ein Äquivalent Formaldehyd verloren geht.

Bei dem organischen Cannizzaro-Verfahren wird anstelle einer anorganischen Base ein tertiäres Alkylamin eingesetzt. Damit lassen sich höhere Ausbeuten erzielen als mit einer anorganischen Base. Es fällt als unerwünschtes Nebenprodukt Trialkylammoniumformiat an. Somit geht auch hier ein Äquivalent Formaldehyd verloren.

Die Nachteile des Cannizzaro-Verfahrens werden bei dem sogenannten Hydrierverfahren vermieden. Dabei bringt man Formaldehyd mit dem entsprechenden Aldehyd (II) in Gegenwart von katalytischen Mengen eines Amins zur Reaktion. Damit wird erreicht, dass die Reaktion im wesentlichen auf der Stufe des alkylolierten Aldehyds stoppt. Nach Abtrennung des Formaldehyds wird das Reaktionsgemisch, das neben dem erwähnten alkylolierten Aldehyd noch geringe Mengen des entsprechenden mehrwertigen Alkohols und von Acetalen der gebildeten Alkohole enthält, einer katalytischen. Hydrierung unterworfen, bei der der gewünschte mehrwertige Alkohol erhalten wird.

Ein besonders effektives Verfahren zur Herstellung von durch Kondensation von Aldehyden mit Formaldehyd erhältlichen mehrwertigen Alkoholen wird dabei in der WO 98/28253 beschrieben. Hohe Ausbeuten, verbunden mit dem Anfallen lediglich geringer Mengen an Koppelprodukten, werden mit diesem Verfahren ermöglicht. Es wird dabei so verfahren, dass der höhere Aldehyd mit der 2- bis 8-fachen Menge Formaldehyd in Gegenwart eines tertiären Amins umgesetzt wird, und man das so erhaltene Reaktionsgemisch in zwei Lösungen auftrennt, wobei eine Lösung das erwähnte vollständig methylolierte Alkanal und die andere Lösung nicht umgesetztes Ausgangsprodukt aufweist. Diese letzte Lösung wird in die Reaktion zurückgeführt. Die Auftrennung erfolgt durch Destillation oder einfaches Abtrennen der wässrigen von der organischen Phase. Die das Produkt enthaltende Lösung wird einer katalytischen und/oder thermischen Behandlung unterworfen, um nicht-vollständig alkylolierte Alkanale in die gewünschten vollständig methylolierten Verbindungen zu überführen. Hierbei entstandenes Nebenprodukt wird durch Destillation abgetrennt, und der so erhaltene Sumpf wird der katalytischen Hydrierung, die zu den mehrwertigen Alkoholen führt, unterworfen.

Bei dem erfindungsgemäßen Verfahren zur Herstellung von Polyetherolen werden mehrwertige Alkohole der Formel (I) eingesetzt, die nach dem Hydrierverfahren erhalten worden sind, also durch Umsetzung eines Aldehyds der Formel (II) mit Formaldehyd und anschließender Überführung der Aldehydgruppe in eine Hydroxygruppe durch katalytische Hydrierung erhalten worden sind, besonders bevorzugt solche, die nach dem in der WO 98/28253 beschriebenen Verfahren erhalten worden sind.

Erfindungsgemäß wesentlich ist, dass der Formaldehydacetalgehalt in dem eingesetzten mehrwertigen Alkohol unter 500 Gew.-ppm und bevorzugt unter 400 Gew.-ppm beträgt.

Als Formaldehydacetale (Formale) werden dabei solche cyclischen oder aliphatischen Verbindungen verstanden, die das Strukturelement

$$-O-CH_2-O- \qquad (III)$$

beinhalten.

Dies können solche Halb- oder Vollacetale sein, die sich von Hauptkomponenten und Verunreinigungen,

sowie Neben-, Zwischen- oder Folgeprodukten des Reaktionsgemisches ableiten.

Dabei kann es sich beispielsweise um folgende Formaldehydacetale der Formel (IV) handeln:

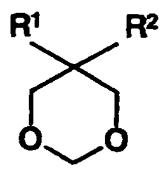

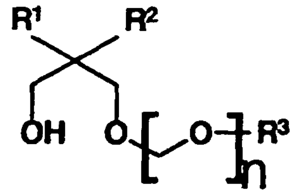

**(IV)**

Darin haben $R^1$ und $R^2$ die oben angeführten Bedeutungen, ferner bedeuten

$R^3$ geradkettiges oder verzweigtes $C_1$-$C_{10}$-, bevorzugt $C_1$-$C_8$- und besonders bevorzugt $C_1$-$C_5$-Alkyl, geradkettiges oder verzweigtes $C_1$-$C_{10}$-, bevorzugt $C_1$-$C_8$- und besonders bevorzugt $C_1$-$C_6$-Hydroxyalkyl oder Wasserstoff und

n eine ganze Zahl von 1 bis 4, bevorzugt von 1 bis 3 und besonders bevorzugt von 1 bis 2.

Beispiele für $R^3$ sind Wasserstoff, Methyl, Ethyl, n-Propyl, n-Butyl, 2-Methylpropyl, 2-Methylbutyl, 2-Ethyl-3-hydroxypropyl, 2-Methyl-3-hydroxypropyl, 2,2-Bis(hydroxymethyl)butyl, 2,2-Bis(hydroxymethyl)propyl, 2,2-Dimethyl-3-hydroxypropyl, 3-Hydroxypropyl, 3-Hydroxy-2-(hydroxymethyl)propyl oder 3-Hydroxy-2,2-bis(hydroxymethyl) propyl.

Bevorzugt handelt es sich um folgende Formaldehydacetale:

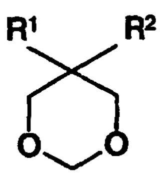

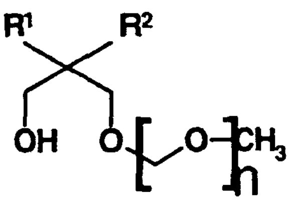

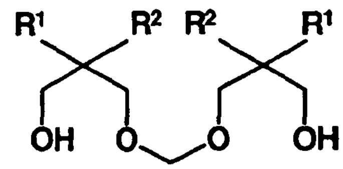

**(IVa)** **(IVb)** **(IVc)**

Darin haben $R^1$, $R^2$ und n die oben genannten Bedeutungen.

Besonders bevorzugt handelt es sich um die Formaldehydacetale IVa, IVb (n = 1), IVb (n = 2) und IVc.

Dabei bilden sich die Methanolacetale aus Methanol, der in Formaldehyd in der Regel zu einem niedrigen Anteil enthalten ist, beziehungsweise sich während der Herstellung durch Cannizzaro-Reaktion von Formaldehyd in geringen Mengen bildet.

Typische Formaldehydacetale sind beispielsweise für den Fall der Synthese des dreiwertigen Alkohols Trimethylolpropan (TMP) aus Formaldehyd und n-Butyraldehyd in Gegenwart katalytischer Mengen an Trialkylamin die Formaldehydacetale IVa, IVb (n = 1), IVb (n = 2) und IVc, worin jeweils $R^1$ Ethyl und $R^2$ Hydroxymethyl ist, welche im Rohprodukt des Hydrierverfahren zu 0,05 bis 10 Gew.-% enthalten sein können.

Der Formaldehydacetalgehalt berechnet sich als Summe des Molgewichtsanteils von Formaldehydäquivalenten an dem jeweiligen Formaldehydacetal, multipliziert mit dessen analytisch gefundenen Gewichtsanteil am Reaktionsgemisch.

So berechnet sich beispielsweise der Forinaldehydacetalgehalt für ein Trimethylolpropangemisch ($R^1$ = Ethyl, $R^2$ = Hydroxymethyl), das die Komponenten (IVa), (IVb, mit n = 1 und n = 2) sowie (IVc) enthält wie folgt:

$$\text{Formaldehydacetalgehalt [Gew.-\%)} =$$

$$\text{Gew.-\% (Iva)} \times \frac{30\text{g/mol}}{146\text{g/mol}} + \text{Gew.-\% (IVb, n = 1)} \times \frac{30\text{g/mol}}{178\text{g/mol}} +$$

$$\text{Gew.-\% (IVb, n = 2)} \times \times \frac{2\ 30\text{g/mol}}{208\text{g/mol}} + \text{Gew.-\% (IVc)} \times \frac{30\text{g/mol}}{280\text{g/mol}}$$

Um den entsprechenden Formaldehydacetalgehalt in Gew.-ppm zu erhalten, ist dieser Wert mit 10000 zu multiplizieren.

Der Gehalt der jeweiligen Komponenten ist nach dem Fachmann an sich bekannten analytischen Methoden bestimmbar, beispielsweise per Gaschromatographie oder HPLC. Die Identifizierung der jeweiligen Komponenten ist beispielsweise durch Kopplung der genannten analytischen Methoden mit Massenspektrometrie möglich.

Es ist erfindungsgemäß nicht relevant, wie ein solch niedriger Formaldehydacetalgehalt im mehrwertigen Alkohol erzielt wird.

In US 6 096 905 ist ein Verfahren offenbart, bei dem eine Formaldehydacetale enthaltende Zusammensetzung mit einem stark sauren Katalysator bei 30 bis 300°C 1/2 bis 8 Stunden lang behandelt wird.

GB-A 1 290 036 beschreibt ein Verfahren, bei dem eine nach dem anorganischen Cannizzaro-Verfahren erhaltene TMP-Rohlösung, mit einem Kationentauscher behandelt wird.

Ein bevorzugtes Verfahren, den Formaldehydacetalgehalt in einem mehrwertigen Alkohol zu verringern besteht darin, dass man den mehrwertigen Alkohol nach seiner Herstellung durch Destillation reinigt, anschließend einer Temperung unterwirft und anschließend erneut reinigt, vorzugsweise durch Destillation, wie es in der deutschen Anmeldung mit dem Aktenzeichen 100 29 055.8 und dem Anmeldedatum 13. Juni 2000 der BASF Aktiengesellschaft oder in der internationalen Anmeldung mit dem Titel Verfahren zum Entfernen von formaldehydhaltigen Acetalen aus mehrwertigen Alkoholen durch Tempern" der BASF Aktiengesellschaft beschrieben ist.

Wenn mehrwertige Alkohole in einen solchen Temperschritt eingesetzt werden, können besonders gute Ergebnisse beim Einsatz von Alkohollösungen mit einem Gehalt von mehr als 60 %, bevorzugt > 75 %, besonders bevorzugt > 90 %, ganz besonders bevorzugt > 95 % und insbesondere > 98 % erzielt werden. Als weitere Bestandteile können die Alkohollösungen beispielsweise Lösungsmittel, wie z.B. Wasser, Methanol, Ethanol oder n-Butanol, sowie bei der Herstellung des mehrwertigen Alkohols auftretende Nebenprodukte enthalten, bevorzugt in Mengen unter 10 Gew.-%, besonders bevorzugt in Mengen unter 5 Gew.-% und ganz besonders bevorzugt unter 2 Gew.-%.

Sollen mit dem Verfahren Formaldehydacetale aus Rohlösungen mehrwertiger Alkohole, insbesondere Trimethylolpropan mit Produktgehalten von 60 bis 95 Gew.-% entfernt werden, wird das nach dem Hydrierverfahren erhaltene Rohprodukt (der Hydrieraustrag) vor dem Temperschritt einer Entwässerung unterzogen, bei der Wasser und andere Leichtsieder, wie Methanol und Trialkylamin oder Trialkylammoniumformiat, durch Destillation abgetrennt werden.

Damit bei diesem Verfahren die gewünschte Verringerung des Formaldehydacetalgehalts erzielt wird, müssen bestimmte Reaktionsbedingungen eingehalten werden, die in Abhängigkeit von etwa der Art des eingesetzten mehrwertigen Alkohols, den Reinheiten der eingesetzten Produkte, den verwendeten Apparaturen und eventuell weiteren vorhandenen Bestandteilen oder Zusatzstoffen variieren können. Diese Reaktionsbedingungen sind dem Fachmann durch Versuche zugänglich.

Generell wird der Temperschritt bei Temperaturen von 100 bis 300°C, vorzugsweise 160 bis 240°C. Verweilzeiten von 5 min bis 24 h, vorzugsweise 15 min bis 4 h und Drücken von 100 mbar bis 200 bar vorzugsweise 1 bis 10 bar durchgeführt.

Wenn der zu reinigende mehrwertige Alkohol Trimethylolpropan ist, wird der Temperschritt bei Temperaturen von 100 bis 300°C, vorzugsweise 160 bis 240°C, Verweilzeiten von 10 min bis 24 h, vorzugsweise 1 h bis 5 h, besonders bevorzugt 30 min bis 6 h und ganz besonders bevorzugt 45 min bis 4 h, und den vorstehend erwähnten Drücken durchgeführt.

Zur Durchführung des Temperschrittes können die üblichen, dem Fachmann bekannten Apparaturen verwendet werden, wobei dieser kontinuierlich oder diskontinuierlich durchgeführt werden kann. Bei der diskontinuierlichen Durchführung (Batch-Fahrweise) wird der Temperschritt vorzugsweise in einem Rührbehälter durchgeführt, bei der kontinuierlichen Fahrweise in einem Rohrreaktor, wobei hier auf eine Sumpf- oder Rieselfahrweise zurückgegriffen werden kann.

Die meistbevorzugte Ausführungsform des Temperschrittes ist das kontinuierliche Durchführen in einem Rohrreaktor in Sumpffahrweise.

Bei allen diesen Durchführungsvarianten kann der Reaktionsbehälter mit den üblichen, einem Fachmann bekannten Schütt-Füllkörpern, beispielsweise Raschig- oder Pall-Ringen oder Packungen, wie beispielsweise Blechpackungen, versehen sein, um eine bessere Durchmischung der Komponenten zu erreichen. Auch können Träger und/oder Katalysatoren in den üblichen Konfektionierungen, beispielsweise Strängen oder Tabletten, vorhanden sein, um die bei dem Temperschritt ablaufenden Reaktionen zu beschleunigen. Beispiele für geeignete Träger/Katalysatoren umfassen $TiO_2$, $Al_2O_3$, $SiO_2$, geträgerte Phosphorsäure ($H_3PO_4$) und Zeolithe.

In einer Variante des Temperschrittes wird ein geeigneter Zusatzstoff während des Temperschrittes der Reaktionslösung zugefügt, um die zur Verringerung der Formaldehydacetale führenden Reaktionen zu beschleunigen und zu erleichtern. Geeignet sind hierfür nicht zu starke und/oder reduzierende Säuren bzw. deren Anhydride oder Ionentauscher, wie in der US 6 096 905 oder GB 1 290 036 beschrieben ist. Beispiele für geeignete Säuren umfassen Phosphorsäure, Phosphorige Säure, Hypophosphorige Säure, Borsäure, Kohlensäure und schweflige Säure. Auch

Gase wie beispielsweise $CO_2$ und $SO_2$, die in wässriger Lösung sauer reagieren, sind geeignet.

Die als Zusatzstoff zu verwendenden Säuren werden eingesetzt in Mengen von 10 ppm bis 1 Gew.-%, vorzugsweise 100 bis 2000 ppm. Da der eventuell zugegebene Hilfsstoff nach dem Temperschritt von dem formaldehydacetalreduzierten mehrwertigen Alkohol abgetrennt werden muss, ist es bevorzugt, wenn dieser Zusatzstoff gasförmig ist und daher einfach durch Ausgasen der Reaktionsmischung entfernt werden kann.

Weiterhin kann es vorteilhaft sein, den Temperschritt zur Zersetzung der Formaldehydacetale unter einem inerten Gas durchzuführen, beispielsweise Stickstoff, Argon oder Helium, bevorzugt unter Stickstoff.

Ohne an eine Theorie gebunden zu sein wird vermutet, dass Formaldehydacetale durch den Temperschritt in dem durch Destillation vorgereinigten Alkohol in höhersiedende, schwerflüchtige und leichtsiedende Komponenten überführt werden und so leichter destillativ abtrennbar sind.

Der mehrwertige Alkohol mit vermindertem Formaldehydacetalgehalt lässt sich von den entstehenden hochsiedenden schwerflüchtigen Komponenten durch Destillation leicht abtrennen. Dem Temperschritt folgt daher generell eine Destillation. Da die in dem Temperschritt aus den Formaldehydacetalen entstehenden schwerflüchtigen Verbindungen sich im allgemeinen hinsichtlich ihres Siedeverhaltens deutlich von den mehrwertigen Alkoholen unterscheiden, können diese durch einfache, nur eine geringe Trennwirkung aufweisende destillative Maßnahmen bzw. Methoden abgetrennt werden. Oftmals genügen dabei Trenneinheiten mit nur einer Destillationsstufe, beispielsweise Fallfilmverdampfer oder Dünnfilmverdampfer. Gegebenenfalls, insbesondere wenn die Destillation auch der weiteren Reinigung des Produktalkohols dient, werden aufwendigere Trennverfahren bzw. Trennapparaturen zum Einsatz kommen, generell Kolonnen mit mehreren Trennstufen, beispielsweise Füllkörperkolonnen, Glockenbodenkolonnen oder Packungskolonnen.

Bei der Destillation werden die üblichen, einem Fachmann bekannten Bedingungen hinsichtlich Druck und Temperatur eingehalten werden, wobei diese selbstverständlich auch von dem eingesetzten Produktalkohol abhängig sind.

Entsprechend einer weiteren Ausführungsform kann der Temperschritt auch mit der Destillation zusammengefasst werden. Dabei findet dann die Temperung im Kolonnensumpf der Destillationsvorrichtung statt, in der der mehrwertige Produktalkohol von den bei der Temperung entstehenden schwerflüchtigen Komponenten, sowie gegebenenfalls anderen Verunreinigungen abgetrennt wird. Werden Temperschritt und Destillation in einer Stufe zusammengefasst, so ist es wichtig, dass die oben dargelegten Reaktionsbedingungen hinsichtlich Druck, Temperatur und insbesondere der Verweilzeit eingehalten werden, um eine ausreichende Zersetzung der Formaldehydacetale zu erreichen. Bei der Kombination von Temper- und Destillationsschritt zu einem einzigen Verfahrensschritt ist der Zusatz von Säure bevorzugt.

Der durch dieses Verfahren erhältliche mehrwertige Alkohol weist im allgemeinen einen Formaldehydacetalgehalt wie oben definiert unter 500 Gew.-ppm auf, bevorzugt unter 400 Gew.-ppm.

Geeignete Alkylenoxide sind beispielsweise Ethylenoxid, Propylenoxid, *iso*-Butylenoxid, Vinyloxiran und/oder Styroloxid, bevorzugt sind Ethylenoxid, Propylenoxid und/oder *iso*-Butylenoxid, besonders bevorzugt sind Ethylenoxid und/oder Propylenoxid.

Bevorzugte Beispiele für derartige alkoxylierte Alkohole sind die Alkoxylierungsprodukte (Va), (Vb) oder (Vc) von Alkoholen der Formel (I),

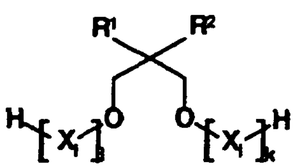

(Va)

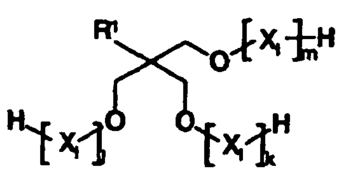

(Vb)

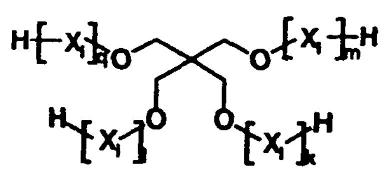

(Vc)

worin

| | |
|---|---|
| $R^1$, $R^2$ | die oben genannten Bedeutungen haben, |
| k, l, m, q | je für eine ganze Zahl von 1 bis 50, bevorzugt 3 bis 20 steht und |
| jedes $X_i$ | für i = 1 bis k, 1 bis 1, 1 bis m und 1 bis q unabhängig voneinander ausgewählt sein kann aus der Gruppe $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$. $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH$ |

$(CH_3)$-O- und -$CH(CH_3)$-$CH_2$-O-,

worin Ph für Phenyl und Vin für Vinyl steht.

Bevorzugt handelt es sich dabei um ein- bis zwanzigfach, besonders bevorzugt drei- bis neunzehnfach ethoxyliertes, propoxyliertes oder gemischt ethoxyliertes und propoxyliertes Neopentylglykol, Trimethylolpropan, Trimethylolethan oder Pentaerythrit.

Unter diesen besonders bevorzugt sind solche mehrwertigen Alkohole der Formel (Vb).

Die Umsetzung der Alkohole mit einem Alkylenoxid ist dem Fachmann an sich bekannt. Mögliche Durchführungsformen finden sich in Houben-Weyl, Methoden der Organischen Chemie, 4. Auflage, 1979, Thieme Verlag Stuttgart, Hrsg. Heinz Kropf, Band 6/1a, Teil 1, Seiten 373 bis 385.

Vorzugsweise wird die Reaktion wie folgt durchgeführt:

Der mehrwertige Alkohol wird gegebenenfalls in einem geeigneten Lösungsmittel bei Temperaturen zwischen 0 und 200°C, bevorzugt zwischen 100 und 180°C, bevorzugt unter Schutzgas, wie z.B. Stickstoff, vorgelegt. Dazu wird kontinuierlich oder portionsweise das Alkylenoxid, gegebenenfalls bei einer Temperatur von -30 bis 50°C gelöst in einem der oben genannten Lösungsmittel, unter guter Durchmischung so zudosiert, dass die Temperatur des Reaktionsgemisches zwischen 100 und 180°C, bevorzugt zwischen 100 und 150°C gehalten wird. Die Reaktion kann dabei unter einem Druck von bis zu 60 bar, bevorzugt bis zu 30 bar und besonders bevorzugt bis zu 10 bar stattfinden.

Die Menge an Alkylenoxid wird dabei so eingestellt, dass pro mol mehrwertigem Alkohol bis zu $(1{,}1 \times (k + l + m + q))$ mol Alkylenoxid, bevorzugt bis zu $(1{,}05 \times (k + l + m + q))$ mol Alkylenoxid und besonders bevorzugt $(k + l + m + q)$ mol Alkylenoxid zudosiert werden, wobei k, l, m und q die oben genannten Bedeutungen haben.

Gegebenenfalls kann bis zu 50 mol-% bezogen auf den mehrwertigen Alkohol, besonders bevorzugt bis zu 25 mol-% und ganz besonders bevorzugt bis zu 10 mol-% eines Katalysators zur Beschleunigung zugesetzt werden, beispielsweise, Monoethanolamin, Diethanolamin, Triethanolamin, Dimethylaminoethanolamin, Ethylenglykol oder Diethylenglykol, sowie Alkalihydroxide, Alkoholate oder Hydrotalcit, bevorzugt Alkalihydroxide in Wasser. Bei der Verwendung von DMC-Katalysatoren werden diese in einer Menge von 10 bis 1000 ppm, vorzugsweise 10 bis 500 ppm und insbesondere 10 bis 250 ppm zugesetzt.

Nach vollständiger Zudosierung des Alkylenoxids wird in der Regel 10 bis 500 min, bevorzugt 10 bis 120 min, bei Temperaturen zwischen 30 und 220°C, bevorzugt 80 bis 200°C und besonders bevorzugt 100 bis 180°C nachreagieren gelassen, wobei die Temperatur gleichbleiben oder stufenweise oder kontinuierlich angehoben werden kann.

Der Umsatz an Alkylenoxid beträgt bevorzugt mindestens 90 %, besonders bevorzugt mindestens 95 % und ganz besonders bevorzugt mindestens 98 %. Eventuelle Reste an Alkylenoxid können durch Durchleiten eines Gases, beispielsweise Stickstoff, Helium, Argon oder Wasserdampf, durch das Reaktionsgemisch ausgestrippt werden.

Die Reaktion kann beispielsweise diskontinuierlich, semikontinuierlich oder kontinuierlich in einem Rührreaktor oder auch kontinuierlich in einem Rohrreaktor mit statischen Mischern durchgeführt werden.

Bevorzugt wird die Reaktion vollständig in der. Flüssigphase durchgeführt.

Das entstandene Reaktionsprodukt kann in roher oder aufgearbeiteter Form weiterverarbeitet werden.
Falls eine Weiterverwendung in reiner Form gewünscht wird, so kann das Produkt beispielsweise über Kristallisation und fest/flüssig-Trennung aufgereinigt werden.

Üblicherweise wird die Base durch Zusatz einer Säure neutralisiert und ausgesalzt. Als Säuren werden organische Säuren, wie Ameisensäure oder Essigsäure bzw. verdünnten anorganischen Säuren wie Phosphorsäure, Salzsäure oder Schwefelsäure verwendet.
Die Ausbeuten liegen in der Regel über 75 %, meist über 80 % und häufig über 90 %.

Das Verfahren, nach dem die Herstellung von Polyetherolen aus Alkylenoxiden und einem mehrwertigen Alkohol durchgeführt wird, ist nicht beschränkt. Erfindungsgemäß wesentlich ist, dass der eingesetzte mehrwertige Alkohol einen Formaldehydgehalt wie oben definiert unter 500 Gew.-ppm, bevorzugt 400 ppm aufweist.

Die nach dem erfindungsgemäßen Verfahren hergestellten Polyetheralkohole können beispielsweise als Schmiermittel verwendet oder weiterverarbeitet werden. So können die Polyetheralkohole beispielsweise zu Acrylaten oder durch Umsetzung mit Isocyanaten zu Polyurethanen verarbeitet werden.

In dieser Schrift verwendete ppm- und Prozentangaben beziehen sich, falls nicht anders angegeben, auf Gewichtsprozente und -ppm.

APHA-Farbzahlen wurden gemäß DIN-ISO 6271 bestimmt.

Die Erfindung soll an den nachstehenden Beispielen näher beschrieben werden.

Herstellungsvorschrift der Polyetherole

Für die gaschromatographische Ermittlung der in dieser Anmeldung angegebenen Formaldehydacetalgehalte wurde die Säule DB5 mit einer Länge von 30 m, einem Durchmesser von 32 mm und 1 µm Beschichtungsdicke verwendet. Die Detektion erfolgte mit einem Flammenionisationsdetektor. Der ermittelte Formaldehydacetalgehalt wird

im folgenden als Formaldehydzahl bezeichnet.

In einem Rührkessel wurden 1090 Liter geschmolzenes TMP mit unterschiedlicher Formaldehyzahl bei 100°C vorgelegt und unter Stickstoff 8,2 Liter einer 45%igen Kaliumhydroxid-Lösung zugegeben. Durch Erhitzen auf 120°C wurde bei 20 mbar Druck das Wasser abdestilliert, anschließend Stickstoff aufgepresst und bei einem Sauerstoff-Gehalt von < 0,3 % wurden insgesamt 7520 Liter Ethylenoxid bei einer Temperatur von 160°C nach und nach auf die Lösung aufgepresst. Nach einer Stunde bei 160°C kühlt man auf 90°C ab und belüftet mit Stickstoff. Nun gibt man 203 Liter VE-Wasser zu und rührt bei 90°C 1 Stunde. Zum Entsalzen des Polyetherols gibt man anschließend 9,9 Liter 35%ige Phosphorsäure zu, rührt 30 Minuten bei 90°C und filtriert ab. Zur vollständigen Entfernung von Wasser wird das Polyetherol bei 120°C und 20 mbar eine Stunde destillativ entwässert und abgekühlt.

In der Tabelle sind Versuche mit unterschiedlichen TMP-Qualitäten und der daraus resultierenden Farbzahlen zusammengefasst.

| Versuchs-Nr. | Formaldehydzahl des eingesetzten TMPs [Gew.-ppm] | Farbzahl des Polyetherols [Apha] |
|---|---|---|
| I | 280 | 10 |
| II | 460 | 17 |
| III | 620 | 26 |
| IV | 860 | 61 |
| V | 1400 | 289 |

**Patentansprüche**

1. Verfahren zur Herstellung von Polyetherolen von mehrwertigen Alkoholen, der Formel (I),

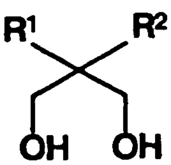

(I)

worin $R^1$ und $R^2$ unabhängig voneinander Wasserstoff, $C_1$-$C_{10}$-Alkyl, $C_1$-$C_{10}$-Hydroxyalkyl, Carboxyl oder $C_1$-$C_4$-Alkoxycarbonyl bedeuten, durch Umsetzung von einem Alkylenoxid mit dem entsprechenden mehrwertigen Alkohol in Gegenwart einer Base sowie gegebenenfalls in Gegenwart eines Lösungsmittels, **dadurch gekennzeichnet, dass** der eingesetzte mehrwertige Alkohol durch Umsetzung eines Aldehydes der Formel (II)

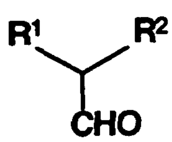

(II)

mit Formaldehyd und anschließender Überführung der Aldehydgruppe in eine Hydroxygruppe durch katalytische Hydrierung erhalten worden ist und einen Formaldehydacetalgehalt unter 500 ppm aufweist.

2. Verfahren nach Anspruch 1, **dadurch gekennzeichnet, dass** es sich bei dem mehrwertigen Alkohol um Trimethylolbutan, Trimethylolpropan, Trimethylolethan, Neopentylglykol, Pentaerythrit, 2-Ethyl-1,3-Propandiol, 2-Methyl-1,3-Propandiol oder 1,3-Propandiol handelt.

3. Verfahren nach einem der vorstehenden Ansprüche, **dadurch gekennzeichnet, dass** man den mehrwertigen Alkohol nach seiner Herstellung durch Destillation reinigt, anschließend einer Temperung unterwirft und anschließend erneut reinigt.

4. Verfahren nach Anspruch 3, **dadurch gekennzeichnet, dass** man die Temperung bei 100 bis 300°C durchführt.

5. Verfahren nach einem der vorstehenden Ansprüche, **dadurch gekennzeichnet, dass** das molare Verhältnis von der Anzahl der Hydroxygruppen im mehrwertigen Alkohol zum Alkylenoxid 0,25 bis 50 bevorzugt 1 bis 6 beträgt.

6. Verfahren nach einem der vorstehenden Ansprüche, **dadurch gekennzeichnet, dass** man als Base in der Veretherung Monoethanolamin, Diethanolamin, Triethanolamin, Dimethylaminoethanolamin, sowie Alkalihydroxide, Alkoholate oder Hydrotalcit, bevorzugt Alkalihydroxide in Wasser oder Gemische davon verwendet.

## Claims

1. A process for preparing polyetherols of polyhydric alcohols of the formula (I)

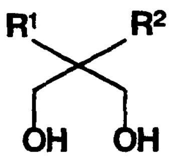

(I)

where $R^1$ and $R^2$ are each independently hydrogen, $C_1$-$C_{10}$-alkyl, $C_1$-$C_{10}$-hydroxyalkyl, carboxyl or $C_1$-$C_4$-alkoxycarbonyl, by reacting an alkylene oxide with the appropriate polyhydric alcohol in the presence of a base and in the presence or absence of a solvent, wherein the polyhydric alcohol used has been obtained by reacting an aldehyde of the formula (II)

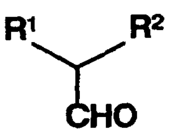

(II)

with formaldehyde and then converting the aldehyde group to a hydroxyl group by catalytic hydrogenation and has a formaldehyde acetal content of less than 500 ppm.

2. A process as claimed in claim 1, wherein the polyhydric alcohol is trimethylolbutane, trimethylolpropane, trimethylolethane, neopentyl glycol, pentaerythritol, 2-ethyl-1,3-propanediol, 2-methyl-1,3-propanediol or 1,3-propanediol.

3. A process as claimed in any of the preceding claims, wherein the polyhydric alcohol, after its preparation, is purified by distillation, then subjected to heat treatment and then purified again.

4. A process as claimed in claim 3, wherein the heat treatment is carried out at from 100 to 300°C.

5. A process as claimed in any of the preceding claims, wherein the molar ratio of the number of hydroxyl groups in the polyhydric alcohol to the alkylene oxide is from 0.25 to 50, preferably from 1 to 6.

6. A process as claimed in any of the preceding claims, wherein the base used in the etherification is monoethanolamine, diethanolamine, triethanolamine, dimethylaminoethanolamine, or else an alkali metal hydroxide or alkoxide or hydrotalcite, preferably an alkali metal hydroxide in water or a mixture thereof.

## Revendications

1. Procédé de préparation de polyéthérols d'alcools polyfonctionnels de la formule (I) :

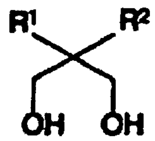

(I)

dans laquelle $R^1$ et $R^2$ représentent indépendamment l'un de l'autre de l'hydrogène ou un groupe alkyle en $C_1$-$C_{10}$, hydroxyalkyle en $C_1$-$C_{10}$, carboxyle ou alcoxycarbonyle en $C_1$-$C_4$, par réaction d'un oxyde d'alkylène avec l'alcool polyfonctionnel correspondant, en présence d'une base ainsi qu'éventuellement en présence d'un solvant, **caractérisé en ce que** l'alcool polyfonctionnel mis en oeuvre a été obtenu par réaction d'un aldéhyde de la formule (II) :

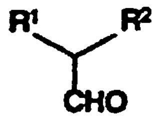

(II)

avec du formaldéhyde et conversion ultérieure du groupe aldéhyde en un groupe hydroxy par hydrogénation catalytique et **en ce qu'**il présente une teneur en formaldéhyde-acétal inférieure à 500 ppm.

**2.** Procédé suivant la revendication 1, **caractérisé en ce que**, en ce qui concerne l'alcool polyfonctionnel, il s'agit de triméthylolbutane, de triméthylolpropane, de triméthyloléthane, de néopentylglycol, de pentaérythrite, de 2-éthyl-1,3-propanediol, de 2-méthyl-1,3-propanediol ou de 1,3-propanediol.

**3.** Procédé suivant l'une des revendications précédentes, **caractérisé en ce qu'**on purifie par distillation l'alcool polyfonctionnel après sa préparation, on le soumet ensuite à un étuvage et on le purifie ensuite à nouveau.

**4.** Procédé suivant la revendication 3, **caractérisé en ce qu'**on effectue l'étuvage à 100 jusqu'à 300°C.

**5.** Procédé suivant l'une des revendications précédentes, **caractérisé en ce que** le rapport molaire entre le nombre des groupes hydroxy dans l'alcool polyfonctionnel et l'oxyde d'alkylène est de 0,25 à 50, de préférence de 1 à 6.

**6.** Procédé suivant l'une des revendications précédentes, **caractérisé en ce que**, comme base, on utilise dans l'éthérification de la monoéthanolamine, de la diéthanolamine, de la triéthanolamine, de la diméthylaminoéthanolamine, ainsi que des hdyroxydes de métal alcalin, des alcoolates ou de l'hydrotalcite, de préférence des hydroxydes de métal alcalin, dans l'eau ou leurs mélanges.